# EUROPEAN PATENT SPECIFICATION

(11) **EP 4 021 954 B1**
(45) Date of publication and mention of the grant of the patent: **16.10.2024**
(21) Application number: 20760478.6
(22) Date of filing: 27.08.2020
(51) Int. Cl.: C08F 279/04, C08F 2/02, C08F 2/04, C08L 25/12, C08L 55/02

(54) **ABS MOLDING MATERIAL OBTAINED BY MASS OR SOLUTION POLYMERIZATION**
DURCH MASSENPOLYMERISATION ODER LÖSUNGSPOLYMERISATION ERHALTENES ABS-FORMMATERIAL
MATÉRIAU DE MOULAGE À BASE D'ABS OBTENU PAR POLYMÉRISATION EN MASSE OU EN SOLUTION

(30) Priority: 30.08.2019 EP 19194553
(43) Date of publication of application: 06.07.2022
(73) Proprietor: INEOS Styrolution Group GmbH, 60325 Frankfurt am Main (DE)
(72) Inventor: NIESSNER, Norbert, 67159 Friedelsheim (DE); MICHELS, Gisbert, 51375 Leverkusen (DE); DE VET, Walter, 5126 BJ Gilze (NL)
(74) Representative: Jacobi, Markus Alexander
(86) International application number: PCT/EP2020/073923
(87) International publication number: WO 2021/037953

(56) References cited:
- US-A- 5 414 045
- US-A1- 2007 265 393
- US-A1- 2019 119 481
- US-B1- 6 376 605

## Description

### ABS molding material obtained by mass or solution polymerization

The present invention relates to ABS (Acrylonitrile-Butadiene-Styrene) molding compositions having improved organoleptic properties comprising a rubber modified vinylaromatic (ABS) copolymer composition, obtained by mass (bulk) or solution polymerization in a continuous process, and to the use of said molding compositions for various applications.

The preparation of impact ABS molding materials by mass or solution polymerization is known for many years. Recently, in particular the automotive industry is looking for ABS for interior parts (consoles, knobs, etc.) following more and more stringent rules on residual monomers and, as a result, on low "volatile organic compounds" (VOC) migrating out of the ABS plastic part. A major purpose for this requirement is the demand for ABS with benign organoleptic behavior for the automotive interior sector. This means to have low odor and low smell, together with low gloss for minimized optical reflections in the automotive interior.

The mechanical properties of ABS molding materials polymerized in bulk or solution on the one hand and prepared in emulsion on the other hand are substantially similar. The advantages of bulk or solution polymers are, in particular, the lower preparation costs (inter alia higher rubber effectiveness, no effluent) and paler inherent color of the polymer product, which consumes less pigment(s) for coloration.

Mass-ABS products have the advantage of lower surface gloss since the bulk- or solution-polymerized ABS often contains relatively large dispersed rubber particles (often average particle size more than 1000 nm). US 6 376 605 B1 is directed to ABS resins having an excellent mouldability or formability which do not undergo heat deterioration easily and have improved heat resistance and impact resistance. The ABS resins are used or automotive of household articles and show a rubber particle size of more than 0.5 micrometer. The sulfur content of the ABS resins is addressed in US 6 376 605 B1.

US-Patents 5,250,611, 5,278,253 and 5,387,650 disclose a continuous process for the preparation of a high-impact polystyrene-acrylonitrile molding materials whose dispersed polybutadiene rubber particles have diameters of less than 500 nm, by bulk or solution polymerization in at least two or more reaction zones, namely in consecutive reactors with cooling tubes and stirrer at 50 to 170 °C using a free-radical initiator (0.01 to 0.5 wt.-% based on monomers) and preferably a chain-transfer agent (regulator 0.01 to 0.5 wt.-%), phase inversion taking place in one of the reactors. In a first step a rubber solution is prepared by adding styrene and acrylonitrile to a polybutadiene rubber. Then, said rubber solution is fed to a first reactor to which a radical initiator (TBPND or TBPPI) is added at temperatures of 80°C.

A chain transfer agent is added during polymerization. 1 to 3 further reactors are used for the polymerization at temperatures of 130 to 146°C. The products obtained according to said prior art however have a low gloss. Furthermore, said documents are silent about the odor of the products and thus give no indication how to keep the smell of polymer compositions and parts low.

Thus, it is an objective of the present invention to provide a matte and low gloss ABS (thermoplastic) molding composition prepared by a continuous mass or solution polymerization process which has improved organoleptic properties. Moreover, it is desired that the ABS material can be prepared and processed easily and without complicated technical steps.

It was found that these objectives are achieved by a process for the preparation of an ABS molding compositions according to the claims. One aspect of the invention is a process for the preparation of a molding composition comprising (consisting of):
a) a rubber modified vinylaromatic copolymer composition A) (component A), composed of a matrix phase comprising a copolymer of monomers B1) and B2), and a dispersed phase comprising particles of graft rubber copolymer C') composed of rubber polymer C) (= graft base) with grafts built up from (parts or portions) monomers B1) and B2),
   obtained by mass (bulk) or solution polymerization of monomers B1) and B2)
      B1: 50 to 70 wt.-%, preferably 59 to 70 wt.-%, based on B1), B2) and C), of at least one vinylaromatic monomer B1), preferably styrene and/or alpha-methylstyrene;
      B2: 10 to 30 wt.-%, preferably 19 to 30 wt.-%, - based on B1), B2) and C) - of at least one comonomer B2) different from B1), which is acrylonitrile and/or methacrylonitrile, optionally in combination with at least one further monomer selected from the group consisting of: C₁-C₄-alkyl(meth)acrylates, maleic anhydride, N-phenyl maleimide, N-cyclohexyl maleimide and (meth)acrylamide;
   in a continuous process in the presence of:
      C: 11 to 20 wt.-%, preferably 11 to 18 wt.-%, - based on B1), B2) and C) - of a rubber polymer C) made from:
      C1: 30 to 100 wt.-%, preferably 70 to 100 wt.-% - based on C1) and C2) - of a conjugated diene C1), preferably 1,3-butadiene and/or isoprene;
      C2: 0 to 70 wt.-%, preferably 0 to 30 wt.-%, - based on C1) and C2) - of at least one comonomer, preferably styrene;
   where the sum of components B1), B2) and C) is 100 wt.-%, and
b) 0 to 20 pbw, based on 100 pbw A), of at least one pigment D), and
c) 0 to 10 pbw, based on 100 pbw of A), of at least one additive and/or processing aid E), different from component D);

wherein co-monomers B1) and B2), in particular styrene and acrylonitrile, are used in a B1):B2) (weight)-ratio of from 76:24 to 74:26; and
wherein the molding composition is further characterized by:
   - a mean weight particle size of graft rubber copolymer C') of more than 0.5 µm;
   - a melt volume rate MVR (220 °C/10kg) according to ISO 1133-1:2011 of more than 3 ml/10 min, preferably more than 5 ml/10 min;
   - a content of residual volatile organic compounds (monomers and solvents) of not more than 500 ppm; and
   - an amount of sulfur-containing chain transfer agent, preferably of tert.-dodecylmercaptane, measured in a sulphur content of less than 500 ppm.

The term "wt.-%" is identical to "% by weight". The term "pbw" is identical to "parts by weight".

In the context of the invention the mean weight particle size was determined via OsO₄ stained electron photomicrographs and a mathematical algorithm correcting for microtoming particles in random sections between the poles and the equator of a particle.

A preferred rubber modified vinylaromatic copolymer composition A) is obtained by mass (bulk) or solution polymerization of:
B1: 59 to 70 wt.-%, - based on B1), B2) and C) - of at least one vinylaromatic monomer B1), preferably styrene and/or alpha-methylstyrene, in particular styrene;
B2: 19 to 30 wt.-%, - based on B1), B2) and C) - of at least one comonomer B2) different from B1), preferably (meth)acrylonitrile, in particular acrylonitrile;
   in a continuous process in the presence of
C: 11 to 18 wt.-%, - based on B1), B2) and C) - of a rubber polymer C).

Said mass (bulk) or solution polymerization process for the preparation of the molding composition according to the invention is characterized by:
i) dissolving rubber polymer C) in monomer(s) B1) and, optionally B2) and/or a solvent, by agitation of the slurry, thereafter addition of remaining comonomer B2) and optionally a solvent to the rubber polymer solution or slurry;
ii) continuously feeding the solution or slurry obtained in step i) into a first agitated reactor, preferably a continuously stirred tank reactor (CSTR), and carrying out a first polymerization of monomers B1) and B2) in presence of rubber polymer C) by use of radical initiator(s); and
iii) optionally continuously feeding the content of the first reactor into one or more, preferably one, further agitated reactor(s), preferably a continuously stirred tank reactor (CSTR), for a second polymerization; followed by
iv) degassing of the polymer melt obtained in step iii) by pre-heating said polymer melt followed by devolatilization in a devolatilizing apparatus.

Component D) is at least one pigment, which, if present, is generally used in amounts of
0.05 to 20 pbw, preferably 0.10 to 10 pbw, based on 100 pbw of component A).

Component E) is at least one additive and/or processing aid, different from component D), which, if present, is generally used in amounts of preferably 0.01 to 10 pbw, preferably 0.02 to 5 pbw, based on 100 pbw of component A).

Preferred molding compositions comprise 0.10 to 10 pbw component of component E).

The rubber modified vinylaromatic copolymer composition A) is generally composed of a matrix phase comprising a copolymer of monomers B1) and B2), and a dispersed phase comprising particles of graft rubber copolymer C') composed of rubber polymer C) (= graft base) with grafts built up from (parts or portions) monomers B1) and B2).

Suitable vinylaromatic monomers B1) are styrene, alpha-methylstyrene, o-, m- and p-methyl-styrene, preferably styrene and/or alpha-methylstyrene, in particular styrene. Suitable co-monomers B2) are acrylonitrile (B2.1) and/or methacrylonitrile (B2.2), which are optionally used in combination with at least one further monomer such as C₁-C₄-alkyl(meth)acrylates, maleic anhydride, N-phenyl maleimide, N-cyclohexyl maleimide and (meth)acrylamide. Preferred comonomers B2) are acrylonitrile and/or methacrylonitrile, in particular acrylonitrile.

Said comonomers B1) and B2), in particular styrene and acrylonitrile, are used in a B1:B2 (weight)-ratio of from 76:24 to 74:26.

Rubber component C1 is preferably based on 1,3-butadiene and/or isoprene, more preferably 1,3-butadiene.

Rubber component C2 preferably is at least one monomer selected from the group consisting of: styrene, α-methylstyrene, acrylonitrile, methacrylonitrile and methyl methacrylate, in particular styrene.

In case rubber component C2 is α-methylstyrene its maximum amount, based on C), is 30 wt.-%. Preferably no further rubber component C2 is used.

A particularly suitable rubber polymer C) is medium- or high-cis polybutadiene, preferably a medium-cis polybutadiene, having a molecular weight of from 70,000 to 350,000 (weight average). In the afore-mentioned process the rubber polymer C) is employed in an amount of from 11 to 20 wt.-%, preferably 11 to 18 wt.-%, based on B1), B2) and C).

Preferably at least 1 wt.-% of the particles, more preferably at least 10 wt.-% of the particles and most preferably at least 50 wt.-% of the particles of the graft rubber copolymer C') have a mean weight particle size in the range of 0.51 to 5.00 µm, more preferably 0.51 to 3.00 µm, most preferably 0.51 to 2.00 µm.

Furthermore preferred the particles of the graft rubber copolymer C') have a mono disperse particle size distribution.

One further aspect of the invention is the molding composition obtained by the afore-mentioned mass (bulk) or solution polymerization process according to the invention.

Generally in step i) of the process according to the invention rubber polymer C) is used dry e.g. in the form of bales or crumbs.

In step (i) the use of a solvent is preferred. Suitable solvents are toluene, xylene, methyl ethyl ketone, tetrahydrofuran or ethylbenzene, in particular methyl ethyl ketone and/or ethylbenzene. Said solvents can be used alone or in mixture, in particular in an amount of up to 25 wt.-%, based on B1), B2) and C).

Preferably at first in step i) monomer B2) is not present, and thus rubber polymer C) is dissolved in monomer B1) only, plus preferably a solvent.

Suitable agitated reactors used in said process according to the invention (in steps (ii) and (iii)) are continuously stirred tank reactors (CSTR), static mixers (e.g. SMX Sulzer) and/or plug flow reactors. Said agitated reactors are optionally equipped with cooling devices such as overhead condensers or cooling pipes. Preferred are continuously stirred tank reactors, in particular preferred are vertical CSTRs.The agitated reactors used in steps ii) and iii) are usually employed in series.

According to one embodiment two CSTRs in series are used, in particular one CSTR is used in step ii) and one further CSTR in step iii).

According to a further embodiment three CSTRs in series are used, in particular one CSTR is used in step ii) and two further CSTRs in step iii).

Preferred radical initiator(s) are such with a half-life time of 5 min or less at temperatures of 155 °C. Said radical initiators can be graft-active peroxides. More preferred are such radical initiators which produce tert-butyloxy radicals. Preferred are tert-butyl per-oxy compounds such as 1,1-di(tert.butylperoxy)-3,3,5-trimethylcyclohexane (TMCH), tert-butyl perneodecanoate (TBPND) and/or tert-butyl perpivalate (TBPPI), in particular TMCH and/or TBPND.

The radical initiators are generally metered separately into the first agitated reactor in step ii) of the process according to the invention. The one or more initiators are employed in an amount of 10 to 100 mmol, preferably 20 to 80 mmol, related to 1 kg of rubber polymer C).

The first polymerization in step (ii) of the process according to the invention is preferably carried out at a temperature of 50°C to 100°C, more preferably 60 to 90°C.

During the first polymerization (in step ii)) the rubber polymer C) is grafted with monomers B1) and B2). In the course of the first polymerization process generally a phase inversion takes place.

In the mass (bulk) or solution polymerization process, the rubber polymer C) initially dissolved in the monomers B1), B2) and an optional solvent will phase separate, forming discrete rubber polymer particles as the polymerization of monomers B1) and B2) proceeds. This process is referred to as phase inversion since the continuous phase shifts from rubber polymer C) to graft rubber copolymer particles C') during the course of polymerization.

In the agitated reactors used in the process according to the invention the shear rate, in particular the stirring speed, is controlled in order to obtain a graft rubber copolymer C') with a mean weight particle size of more than 0.5 µm, in particular a graft rubber copolymer C') whereof preferably at least 1 wt.-% of the particles, more preferably at least 10 wt.-% of the particles and most preferably at least 50 wt.-% of the particles have a mean weight particle size in the range of 0.51 to 0.69 µm. The stirring speed usually is in the range of 5 to 150 rpm.

In step (ii), the first polymerization is carried out up to a conversion (= solids content) of at least 20 wt.-%, preferred at least 25 wt.-%.

Suitable chain-transfer agents (regulators) are sulfur-containing chain transfer agents such as conventional mercaptans having from 4 to 18 carbon atoms. n-Butyl mercaptan, n-octyl mercaptan and n- and t-dodecyl mercaptan have proven particularly successful.

The chain transfer agent is preferably added in step ii) and optionally in step iii) of the process according to the invention. More preferably the chain transfer agent is added in steps ii) and iii).

The total amount of the chain transfer agent is generally from 0.01 to 0.50 parts by weight (pbw), preferably from 0.12 to 0.33 pbw, most preferably 0.15 to 0.25 pbw, related to 100 pbw of the sum of B1), B2) and C).

The second polymerization in step iii) of the process according to the invention is preferably carried out at a temperature of 100°C to 150°C, more preferably 110 to 140°C.

During the second polymerization (in step iii)) a thermal polymerization of the polymer matrix built from monomers B1) and B2) is carried out. The second polymerization (in step iii)) is carried out up to a conversion of at least 50 wt.-%, preferred at least 60 wt.-%.

According to one embodiment one CSTR is used in step ii) and one further CSTR in step iii), in which further CSTR the second polymerization (in step iii)) is carried out up to a conversion of at least 50 wt.-%, preferred at least 60 wt.-%.

Then in step iv) of the process according to the invention, the polymer melt obtained in step iii) is degassed by pre-heating said polymer melt followed by devolatilization in a devolatilizing apparatus. During devolatilization residual monomers and optional solvent can be condensed and recycled and, if present, the solvent can be fed back to feed the agitated reactors.

Suitable devolatilizing apparatuses which can be used in process step iv) are, such as, for example, partial vaporizers, partial evaporators, flat evaporators, falling strand de-volatilizers, thin-film evaporators or devolatilizing extruders. Preferably in process step iv) a partial evaporator or a falling strand devolatilizer, in particular a two stage falling strand devolatilizer, is used as devolatilizing apparatus.

The pre-heating of the polymer melt in process step iv) is preferably carried out at a temperature of more than 200 C°, preferably in the range of from 230 to 320°C. The pre-heating of said polymer melt in process step iv) can be carried out in devolatilizing apparatuses as afore-mentioned which are provided with means for heating.

Often tube heat exchangers are used for pre-heating of the polymer melt in step iv). Said tube heat exchangers can be comprised in the afore-mentioned devolatilizing apparatuses.

The degassed product obtained in step iv) is then usually cooled and granulated.

In the process according to the invention optional components D) and/or E) may be used in the above mentioned amounts.

During the process steps (i), (ii), (iii), and/or (iv), often when the rubber solution is or has been prepared in process step i) or before the product melt obtained in process step iii) is degassed, optional component(s) E) and/or D) can be added to the reaction batch in the afore-mentioned amounts.

Examples of pigments suitable as component D) are titanium dioxide, phthalocyanines, ultramarine blue, iron oxides, and carbon black, and the entire class of organic and inorganic pigments.

Examples of additives and/or processing aids suitable as component E) are such as chain transfer agents, internal glidants, antioxidants and/or UV stabilizers (e.g. sterically hindered phenols, sulfur stabilizers and/or phosphorous compounds), lubricants, plasticizers and fillers and the like, and mixtures of these. Preferably chain transfer agents, antioxidants and/or UV stabilizers are used as component E).

The molding composition obtained by the process according to the invention can be subjected to conventional thermoplastic processing, i.e. by extrusion, injection molding, calendering, blow molding, compression molding or sintering.

The molding composition according to the invention has the advantage of a low odor due to a low content (not more than 500 ppm) of VOC and a low content of sulfur-containing chain transfer agents (measured in a sulfur content of less than 500 ppm), and is thus suitable for applications in the home-sector, or, in particular for automotive interior applications.

The molding composition preferably has a yellowness index of at most 25 or less (ASTM D 1925).

A further aspect of the invention is the use of the afore-described rubber-modified vinylaromatic copolymer compositions for household and automotive applications, in particular interior automotive applications. The following examples and claims illustrate the invention.

### EXAMPLES General Description of the Experiments

The following experiments were performed in a 2-vessel-3-tower reactor cascade. In a 250 I stainless steel vessel, rubber polymer crumbs plus stabilizer Irganox 1076 were dissolved in a mixture of styrene and ethyl benzene at 50 °C, within a period of 14 to16 hr. Via a filter with 100 µm mesh size, the obtained rubber polymer solution is pumped into a second vessel and acrylonitrile is added as co-monomer. The content of this second vessel is continuously fed into a 3-tower reactor cascade for the polymerization.

The reactor cascade consists of 3 tower reactors in series. Each of the tower reactors has a volume of 30 liter, a length/diameter (l/d) ratio of 1100/220 mm and contains on the inside horizontal, parallel layers of cooling pipes, with finger paddle agitators in between the pipes.

The first tower reactor - designated as PPT in Table 1b - acts as a reactor for the first polymerization, and is equipped with a dosing station, including static mixer, for adding mercaptane as molecular weight controller (MWC) as a 50 % b.w. solution in ethyl benzene. The polymerization turnover was controlled via the amount of initiator and the temperature. The 2^{nd} and 3^{rd} tower reactors - designated as PT1 and PT2 in Table 1b - act as reactors for the 2^{nd} polymerization.

Degassing was performed through a partial evaporator under nitrogen. Vacuum was generated via a liquid ring pump.

### Variation of rubber polymer and initiator

In Examples 1 to 6 (see Tables 1a and 1b below), the influence of increasing amounts of rubber component C on the behavior of polymerization process was investigated. The initiator was tert.-butyl perpivalate (=TBPPI). The rubber polymer C was a med-cis homo polybutadiene with medium solution viscosity (e.g. Buna HX 500, Diene^{®} 35 AC10 from Lion Elastomers, Buna^{®} CB 380 from Arlanxeo/ solution viscosity 90 mPa*s). In order to obtain highly grafted polybutadiene-g-SAN rubber particles, the molecular weight of the matrix was controlled via the amount of TDDM (tert.-dodecycl mercaptane). The pre-polymerization tower reactor 1 was run at 80°C and up to a conversion rate of 22 %. Conversion was increased in tower reactors 2 and 3 to 75 %.

In order to maintain the conversion in pre-polymerization tower 1, almost constant amounts of 2 (+/- 0,2) mmol initiator per kg monomer (here: styrene and acrylonitrile) were required, which equals 45 to 15 mmol initiator per kg polybutadiene.

**Table 1a:**

| Feed composition used for polymerization of polybutadiene rubber in styrene/acrylonitrile. | | | | | | | | |
|---|---|---|---|---|---|---|---|---|
| Example No. | | 1 | 2 | 3 | 4 | 5 | 6 | |
| Polybutadiene (PBu) content | [wt.-%] | 5 | 8 | 10 | 13 | 16 | 18 | |
| Flow rate | [l/h] | 13.2 | 12.4 | 12.4 | 12.5 | 14.5 | 14.5 | |
| | kg/h | 11.2 | 11.0 | 11.0 | 11.1 | 12.9 | 12.9 | |
| Zulauf | Styrene | [pbw] | 61.28 | 60.08 | 58.88 | 57.68 | 56.48 | 55.28 |
| | Acrylnitrile | [pbw] | 20.42 | 20.2 | 19.62 | 19.22 | 18.82 | 18.42 |
| | Ethyl benzene | [pbw] | 15.0 | 15.0 | 15.0 | 15.0 | 15.0 | 15.0 |
| | Irganox 1076 | [pbw] | 1.10 | 1.10 | 1.10 | 1.10 | 1.10 | 1.10 |
| | PBu | [pbw] | 3.2 | 4.80 | 6.40 | 8.0 | 9.60 | 11.20 |
| MWC* PPT/PT1 | relative to sum B1), B2), C) | [%] | 0.24 | 0.25 | 0.25 | 0.23 | 0.15 | 0.18 |
| Initiator VPT | [TBPPI] | [ml/h] | 110 | 110 | 120 | 105 | 120 | 145 |
| | (3% solution) | [mmol/h] | 16.4 | 16.4 | 17.9 | 15.7 | 17.9 | 21.7 |
| | rel. to sum | [mmol/kg] | 1.7 | 1.8 | 2.0 | 1.8 | 1.8 | 2.2 |
| | B1), B2), C) | =[ppm] | 300 | 320 | 360 | 320 | 320 | 400 |
| | rel. to PBu | [mmol/kg] | 44 | 31 | 25 | 18 | 16 | 15 |
| Mole ratio | Initiator/MWC | | 0.15 | 0.15 | 0.17 | 0.16 | 0.25 | 0.26 |

| | | | | | | | | |
|---|---|---|---|---|---|---|---|---|
| MWC* = Molecular weight controller (chain transfer agent): TDDM | | | | | | | | |

**Table 1b:**

| Process conditions used for polymerization of polybutadiene in styrene/acrylonitrile | | | | | | | | |
|---|---|---|---|---|---|---|---|---|
| Example No. | | | 1 | 2 | 3 | 4 | 5 | 6 |
| | PBu-content | [wt.-%] | 5 | 8 | 10 | 13 | 16 | 18 |
| VPT | temperature | [°C] | 76-82 | 73-83 | 68-82 | 64-82 | 66-83 | 65-83 |
| | rpm* | [1/min] | 150 | 150 | 150 | 150 | 150 | 130 |
| | solid content | [%] | 19.7 | 22.1 | 23.5 | 22.0 | 22.5 | 26.1 |
| PT1 | temperature | [°C] | 114-124 | 111-125 | 109-125 | 111-127 | 109-130 | 110-128 |
| | rpm | [1/min] | 100 | 100 | 100 | 100 | 100 | 80 |
| | solid content | [%] | 39.8 | 41.0 | 42.8 | 43.4 | 43.3 | 44.0 |
| PT2 | temperature | [°C] | 124-135 | 124-137 | 124-137 | 124-140 | 126-140 | 125-144 |
| | rpm | [1/min] | 15 | 15 | 15 | 15 | 15 | 15 |
| | solid content | [%] | 60.6 | 61.3 | 63.0 | 61.4 | 60.0 | 62.5 |
| degassing | Tₜₒₚ** | [°C] | 260 | 265 | 265 | 240 | 250 | 280 |
| | T_{medium}*** | [°C] | 313 | 313 | 312 | 312 | 310 | 310 |
| | vacuum | [mbar] | ~10 | ~10 | ~10 | ~10 | ~10 | ~10 |
| conversion | PPT | [%] | 20.0 | 21.5 | 21.7 | 18.1 | 17.0 | 20.1 |
| | PT1 | [%] | 24.6 | 23.6 | 24.6 | 27.8 | 27.6 | 24.3 |
| PT2 | | [%] | 25.5 | 25.3 | 24.7 | 23.4 | 23.1 | 25.8 |

| | | | | | | | | |
|---|---|---|---|---|---|---|---|---|
| rpm* = revolutions per minute Tₜₒₚ** = temperature top part of degassing device T_{medium}*** = temperature medium part of degassing device | | | | | | | | |

Due to the specifically higher initiator concentration at lower polybutadiene content, (highly grafted) capsule particles are being formed at low polybutadiene content, while at higher polybutadiene content, the morphology turns into larger "salami type" particles.

The properties of the obtained molding composition (cp. Table 2) were determined by the following test methods:
Mean weight particle size analysis was done via OsO₄ stained electron micrograph and a mathematical algorithm correcting for microtoming particles in random sections between the poles and the equator of a particle.

The content of sulfur-containing chain transfer agent, as well as the amount of residuals were determined via Headspace GC and a capillary column, with standard-substances to define retention time and with standard heating program from 80 to 300°C.

The organoleptic properties of the samples were tested as follows:
In a 100 ml Erlenmeyer Flask, a sample of 10 g was placed and 50 ml of freshly boiling water was added.

After 5 seconds the nose of a test panel person (in total 3 persons) was placed 10 cm above the Erlenmeyer flask and the smell was scored according to following scale:
▪ 0 = absolutely no smell, completely neutral
▪ 1 = a slight smell
▪ 2 = a significant smell, still acceptable
▪ 3 = a strong smell
▪ 4 = very strong, disgusting smell

The target is to stay at or better than 2.

**Table 2: Properties of the obtained ABS polymer compositions**

| Example No. | | 1 Comp. | 2 Comp. | 3 Comp. | 4 | 5 | 6 |
|---|---|---|---|---|---|---|---|
| PBu content | [wt.-%] | 5 | 8 | 10 | 13 | 16 | 18 |
| Grafted rubber C' mean weight particle size (µm) | | 0.30 | 0.30 | 0.40 | 0.80 | 0.60 | 1.3 |
| Visual appearance of injection molded plaque (Tmolding = 250 °C) | | 1 | 1 | 1 | 2-3 | 2 | 3 |
| Glossiness (1 = high gloss in reflecting sunlight in 75 ° angle to the surface, 2 = slight haze, 3 = clearly less gloss, 4 = almost no light reflection, 5 = no light reflection | | | | | | | |

| | | | | | | | |
|---|---|---|---|---|---|---|---|
| Comp. = Comparative example | | | | | | | |

The data show that the molding compositions according to Ex. 4 to 6 have a significantly lower glossiness in comparison to the molding compositions of Comp. examples 1 to 3.

**Table 3 Organoleptics tests of mass-ABS molding compositions**

| Example | | 7 Comp. | 8 | 9 |
|---|---|---|---|---|
| total sulphur content measured (ppm) | | 510 | 400 | 150 |
| mass-ABS composition - (wt.-% related to final product) | Polybutadiene(wt.%) | 16 | 13 | 11 |
| | styrene (wt.%) | 60 | 61 | 68 |
| | Acrylonitrile (wt.%) | 24 | 26 | 21 |
| Organoleptics score | | 2-3 | 2 | 1 |

| | | | | |
|---|---|---|---|---|
| *based on 100 pbw of the sum of polybutadiene, styrene and acrylonitrile | | | | |

The data show that the ABS molding compositions according to Examples 8 and 9 have improved organoleptic properties.

## Claims

1. A process for the preparation of a molding composition comprising
a) a rubber modified vinylaromatic copolymer composition A), composed of a matrix phase comprising a copolymer of monomers B1) and B2), and a dispersed phase comprising particles of graft rubber copolymer C') composed of rubber polymer C) with grafts built up from (parts or portions) monomers B1) and B2),
obtained by mass (bulk) or solution polymerization of monomers B1) and B2)
B1: 50 to 70 wt.-%, based on B1), B2) and C), of at least one vinylaromatic monomer B1), preferably styrene and/or alpha-methylstyrene;
B2: 10 to 30 wt.-%, based on B1), B2) and C), of at least one comonomer B2) different from B1), which is acrylonitrile and/or methacrylonitrile, optionally in combination with at least one further monomer selected from the group consisting of: C₁-C₄-alkyl(meth)acrylates, maleic anhydride, N-phenyl maleimide, N-cyclohexyl maleimide and (meth)acrylamide;
in a continuous process in the presence of
C: 11 to 20 wt.-%, based on B1), B2) and C), of a rubber polymer C) made from:
C1: 30 to 100 wt.-%, preferably 70 to 100 wt.-%, based on C1) and C2), of a conjugated diene C1), preferably 1,3-butadiene and/or isoprene;
C2: 0 to 70 wt.-%, preferably 0 to 30 wt.-%, based on C1) and C2), of at least one comonomer, preferably styrene;
where the sum of components B1), B2) and C) is 100 wt.-%, and
b) 0 to 20 pbw, based on 100 pbw A), of at least one pigment D), and
c) 0 to 10 pbw, based on 100 pbw of A), of at least one additive and/or processing aid E), different from component D);
wherein co-monomers B1) and B2), in particular styrene and acrylonitrile, are used in a B1):B2) weight-ratio of from 76:24 to 74:26; and
wherein the molding composition is **characterized by**
• a mean weight particle size (determined via OsO₄ stained electron photomicrographs) of graft rubber copolymer C') of more than 0.5 µm;
• a melt volume rate MVR (220 °C/10kg) according to ISO 1133-1:2011 of more than 3 ml/10 min, preferably more than 5 ml/10 min;
• a content of residual volatile organic compounds of not more than 500 ppm; and
• an amount of sulfur-containing chain transfer agent measured in a sulfur content of less than 500 ppm;
• which process is a mass or solution polymerization process **characterized by**:
i) dissolving rubber polymer C) in monomer(s) B1) and, optionally B2) and/or a solvent, by agitation of the slurry, thereafter addition of remaining comonomer B2) and optionally a solvent to the rubber polymer solution or slurry;
ii) continuously feeding the solution or slurry obtained in step i) into a first agitated reactor, preferably a continuously stirred tank reactor (CSTR), and carrying out a first polymerization of monomers B1) and B2), by use of radical initiator(s), and
iii) optionally continuously feeding the content of the first reactor into one or more, preferably one, further agitated reactor(s), preferably a continuously stirred tank reactor (CSTR), for a second polymerization; followed by
iv) degassing of the polymer melt obtained in step iii) by pre-heating said polymer melt followed by devolatilization in a devolatilizing apparatus.

2. A process for the preparation of a molding composition according to claim 1 wherein the rubber modified vinylaromatic copolymer composition A) is obtained by mass (bulk) or solution polymerization of
B1: 59 to 70 wt.-%, - based on B1), B2) and C) - of at least one vinylaromatic monomer B1), preferably styrene and/or alpha-methylstyrene, in particular styrene; and
B2: 19 to 30 wt.-%, - based on B1), B2) and C) - of at least one comonomer B2) different from B1), preferably (meth)acrylonitrile, in particular acrylonitrile;
in a continuous process in the presence of
C: 11 to 18 wt.-%, - based on B1), B2) and C) - of a rubber polymer C).

3. A process for the preparation of a molding composition according to claim 1 or 2 wherein the molding composition comprises 0.01 to 10 pbw of at least one additive and/or processing aid as component E).

4. A process for the preparation of a molding composition according to any of the claims 1 to 3 wherein at least 1 wt.-% of the particles, more preferably at least 10 wt.-% of the particles, most preferably at least 50 wt.-% of the particles, of the graft rubber copolymer C') have a mean weight particle size in the range of 0.51 to 5 µm.

5. A process for the preparation of a molding composition according to any of the claims 1 to 4 wherein graft rubber copolymer C') has a mean weight particle size in the range of 0.51 to 2 µm.

6. A process for the preparation of a molding composition according to any of the claims 1 to 5 wherein the particles of the graft rubber copolymer C') have a mono disperse particle size distribution.

7. A process for the preparation of a molding composition according to any of the claims 1 to 6, wherein:
in step ii) of the mass or solution polymerization process the first polymerization of monomers B1) and B2) in presence of rubber polymer C) is carried out at a temperature of 50°C to 100°C, preferably 60 to 90°C; and
in step iii) the content of the first reactor is continuously fed into one or more, preferably one, further agitated reactor(s), preferably a continuously stirred tank reactor (CSTR), for a second polymerization at temperatures of 100°C to 150°C; and where in steps ii) and optionally iii) a chain transfer agent in total amounts of 0.01 to 0.50 pbw, related to 100 pbw of the sum of B1), B2) and C) is added.

8. A process for the preparation of a molding composition according to any of claims 1 to 7, wherein:
in step i) rubber polymer C) is dissolved only in monomer B1), plus optionally a solvent.

9. A process for the preparation of a molding composition according to any of claims 1 to 8 wherein:
in steps ii) and iii) continuously stirred tank reactors are used having a stirring speed in the range of 5 to 200 rpm.

10. A process for the preparation of a molding composition according to any of claims 1 to 9 wherein two continuously stirred tank reactors (CSTR) in series are used, where one CSTR is used in step ii) and one further CSTR in step iii).

11. A process for the preparation of a molding composition according to any of claims 1 to 10 wherein three CSTRs in series are used, where one CSTR is used in step ii) and two further CSTRs in step iii).

12. A process for the preparation of a molding composition according to any of claims 1 to 11 which process is a solution polymerization process wherein in step i) a solvent, preferably methyl ethyl ketone and/or ethylbenzene, is used.

13. A process for the preparation of a molding composition according to any of claims 1 to 12 wherein
in step iv) as devolatilizing apparatus a partial evaporator or a falling strand devolatilizer, in particular a two stage falling strand devolatilizer, is used.

14. A process for the preparation of a molding composition according to claim 1 where in step ii), the first polymerization is carried out up to a conversion of at least 20 wt.-%, preferred at least 25 wt.-%; and in step iii), the second polymerization is carried out up to a conversion of at least 50 wt.-%, preferred at least 60 wt.-%.

15. A molding composition obtained by the process according to any of claims 1 to 14.

16. Use of the molding composition according to claim 15 for household and automotive applications, in particular interior automotive applications.

## Patentansprüche

1. Verfahren zur Herstellung einer Formmasse, umfassend
a) eine kautschukmodifizierte vinylaromatische Copolymerzusammensetzung A), gebildet aus einer Matrixphase, die ein Copolymer aus den Monomeren B1) und B2) umfasst, und einer dispergierten Phase, die Teilchen von PfropfkautschukCopolymer C') umfasst, das aus Kautschukpolymer C) mit Pfropfungen besteht, die aus (Teilen oder Portionen) der Monomere B1) und B2) gebildet sind,
hergestellt durch Massen(Bulk)- oder Lösungspolymerisation der Monomere B1) und B2)
B1: 50 bis 70 Gew.-%, bezogen auf B1), B2) und C), mindestens eines vinylaromatischen Monomers B1), vorzugsweise Styrol und/oder alpha-Methylstyrol;
B2: 10 bis 30 Gew.-%, bezogen auf B1), B2) und C), mindestens eines von B1) verschiedenen Comonomers B2), das Acrylnitril und/oder Methacrylnitril ist, gegebenenfalls in Kombination mit mindestens einem weiteren Monomer ausgewählt aus der Gruppe bestehend aus: C₁-C₄-Alkyl(meth)acrylaten, Maleinsäureanhydrid, N-Phenylmaleinimid, N-Cyclohexylmaleinimid und (Meth)acrylamid;
in einem kontinuierlichen Verfahren in Anwesenheit von
C: 11 bis 20 Gew.-%, bezogen auf B1), B2) und C), eines Kautschukpolymers C), hergestellt aus:
C1: 30 bis 100 Gew.-%, vorzugsweise 70 bis 100 Gew.-%, bezogen auf C1) und C2), eines konjugierten Diens C1), vorzugsweise 1,3-Butadien und/oder Isopren;
C2: 0 bis 70 Gew.-%, vorzugsweise 0 bis 30 Gew.-%, bezogen auf C1) und C2), mindestens eines Comonomers, vorzugsweise Styrol;
wobei die Summe der Komponenten B1), B2) und C) 100 Gew.-% beträgt, und
b) 0 bis 20 Gew.-Teile, bezogen auf 100 Gew.-Teile A), mindestens eines Pigments D), und
c) 0 bis 10 Gew.-Teile, bezogen auf 100 Gew.-Teile A), mindestens eines von der Komponente D) verschiedenen Zusatzstoffs und/oder Verarbeitungshilfsmittels E);
wobei die Comonomere B1) und B2), insbesondere Styrol und Acrylnitril, in einem Gewichtsverhältnis B1):B2) von 76:24 bis 74:26 verwendet werden; und
wobei die Formmasse **gekennzeichnet ist durch**
• eine mittlere gewichtsbezogene Teilchengröße (bestimmt durch OsO₄-gefärbte elektronenmikroskopische Aufnahmen) des PfropfkautschukCopolymers C') von mehr als 0,5 µm;
• eine Schmelzvolumenrate MVR (220 °C/10 kg) nach ISO 1133-1:2011 von mehr als 3 ml/10 min, vorzugsweise mehr als 5 ml/10 min;
• einen Restgehalt an flüchtigen organischen Verbindungen von nicht mehr als 500 ppm; und
• eine Menge eines schwefelhaltigen Kettenübertragungsmittels, gemessen an einem Schwefelgehalt, von weniger als 500 ppm;
• wobei es sich um ein Massen- oder Lösungspolymerisationsverfahren handelt, das **gekennzeichnet ist durch**:
i) Auflösen des Kautschukpolymers C) in dem/den Monomer(en) B1) und gegebenenfalls B2) und/oder einem Lösungsmittel **durch** Rühren der Aufschlämmung, danach Zugabe des restlichen Comonomers B2) und gegebenenfalls eines Lösungsmittels zu der Kautschukpolymerlösung oder -aufschlämmung;
ii) kontinuierliche Zuführung der in Schritt i) erhaltenen Lösung oder Aufschlämmung in einen ersten Rührreaktor, vorzugsweise einem kontinuierlich betriebenen Rührkesselreaktor (engl.: continuously stirred tank reactor, CSTR), und Durchführung einer ersten Polymerisation der Monomere B1) und B2) unter Verwendung von Radikalinitiator(en), und
iii) gegebenenfalls kontinuierliche Einspeisung des Inhalts des ersten Reaktors in einen oder mehrere, vorzugsweise einen weiteren Rührreaktor(en), vorzugsweise einen kontinuierlich betriebenen Rührkesselreaktor (CSTR), für eine zweite Polymerisation; gefolgt von
iv) Entgasung der in Schritt iii) erhaltenen Polymerschmelze **durch** VorWärmen der Polymerschmelze und anschließende Entgasung in einer Entgasungsvorrichtung.

2. Verfahren zur Herstellung einer Formmasse nach Anspruch 1, wobei die kautschukmodifizierte vinylaromatische Copolymerzusammensetzung A) erhalten wird durch Massen(Bulk)- oder Lösungspolymerisation von
B1: 59 bis 70 Gew.-%, - bezogen auf B1), B2) und C) - mindestens eines vinylaromatischen Monomers B1), vorzugsweise Styrol und/oder alpha-Methylstyrol, insbesondere Styrol; und
B2: 19 bis 30 Gew.-%, - bezogen auf B1), B2) und C) - mindestens eines von B1) verschiedenen Comonomers B2), vorzugsweise (Meth)Acrylnitril, insbesondere Acrylnitril;
in einem kontinuierlichen Verfahren in Anwesenheit von
C: 11 bis 18 Gew.-%, - bezogen auf B1), B2) und C) - eines Kautschukpolymers C).

3. Verfahren zur Herstellung einer Formmasse nach Anspruch 1 oder 2, wobei die Formmasse 0,01 bis 10 Gewichtsteile mindestens eines Zusatzstoffs und/oder Verarbeitungshilfsmittels als Bestandteil E) umfasst.

4. Verfahren zur Herstellung einer Formmasse nach einem der Ansprüche 1 bis 3, wobei mindestens 1 Gew.-% der Teilchen, vorzugsweise mindestens 10 Gew.-% der Teilchen, am meisten bevorzugt mindestens 50 Gew.-% der Teilchen, des Pfropfkautschukcopolymers C') eine mittlere Gewichtsteilchengröße im Bereich von 0,51 bis 5 µm aufweisen.

5. Verfahren zur Herstellung einer Formmasse nach einem der Ansprüche 1 bis 4, wobei das Pfropfkautschukcopolymer C') eine mittlere Gewichtsteilchengröße im Bereich von 0,51 bis 2 µm aufweist.

6. Verfahren zur Herstellung einer Formmasse nach einem der Ansprüche 1 bis 5, wobei die Teilchen des Pfropfkautschukcopolymers C') eine monodisperse Teilchengrößenverteilung aufweisen.

7. Verfahren zur Herstellung einer Formmasse nach einem der Ansprüche 1 bis 6, wobei:
in Schritt ii) des Massen- oder Lösungspolymerisationsverfahrens die erste Polymerisation der Monomere B1) und B2) in Gegenwart des Kautschukpolymers C) bei einer Temperatur von 50°C bis 100°C, vorzugsweise 60 bis 90°C, durchgeführt wird; und
in Schritt iii) der Inhalt des ersten Reaktors kontinuierlich in einen oder mehrere, vorzugsweise einen, weitere(n) Rührreaktor(en), vorzugsweise einen kontinuierlich betriebenen Rührkesselreaktor (CSTR), für eine zweite Polymerisation bei Temperaturen von 100°C bis 150°C eingespeist wird;
und wobei in den Schritten ii) und gegebenenfalls iii) ein Kettenübertragungsmittel in Gesamtmengen von 0,01 bis 0,50 Gewichtsteile, bezogen auf 100 Gewichtsteile der Summe von B1), B2) und C), zugesetzt werden.

8. Verfahren zur Herstellung einer Formmasse nach einem der Ansprüche 1 bis 7, wobei: in Schritt i) das Kautschukpolymer C) nur im Monomer B1) und gegebenenfalls in einem Lösungsmittel gelöst wird.

9. Verfahren zur Herstellung einer Formmasse nach einem der Ansprüche 1 bis 8, wobei: in den Schritten ii) und iii) kontinuierlich betriebene Rührkesselreaktoren mit einer Rührgeschwindigkeit im Bereich von 5 bis 200 U/min verwendet werden.

10. Verfahren zur Herstellung einer Formmasse nach einem der Ansprüche 1 bis 9, wobei zwei kontinuierlich betriebene Rührkesselreaktoren (CSTR) in Reihe verwendet werden, wobei ein CSTR in Schritt ii) und ein weiterer CSTR in Schritt iii) verwendet wird.

11. Verfahren zur Herstellung einer Formmasse nach einem der Ansprüche 1 bis 10, wobei drei CSTR in Reihe verwendet werden, wobei ein CSTR in Schritt ii) und zwei weitere CSTR in Schritt iii) verwendet werden.

12. Verfahren zur Herstellung einer Formmasse nach einem der Ansprüche 1 bis 11, wobei das Verfahren ein Lösungspolymerisationsverfahren ist, bei dem in Schritt i) ein Lösungsmittel, vorzugsweise Methylethylketon und/oder Ethylbenzol, verwendet wird.

13. Verfahren zur Herstellung einer Formmasse nach einem der Ansprüche 1 bis 12, wobei in Schritt iv) als Entgasungsvorrichtung ein Teilverdampfer oder ein Fallstrangentgaser, insbesondere ein zweistufiger Fallstrangentgaser, verwendet wird.

14. Verfahren zur Herstellung einer Formmasse nach Anspruch 1, wobei in Schritt ii) die erste Polymerisation bis zu einem Umsatz von mindestens 20 Gew.-%, bevorzugt mindestens 25 Gew.-% durchgeführt wird; und in Schritt iii) die zweite Polymerisation bis zu einem Umsatz von mindestens 50 Gew.-%, bevorzugt mindestens 60 Gew.-% durchgeführt wird.

15. Formmasse, erhalten nach dem Verfahren nach einem der Ansprüche 1 bis 14.

16. Verwendung der Formmasse nach Anspruch 15 für Haushalts- und Automobilanwendungen, insbesondere Automobilinnenraumanwendungen.

## Revendications

1. Procédé de préparation d'une composition de moulage comprenant
a) une composition de copolymère vinylaromatique modifié par caoutchouc A), composée d'une phase de matrice comprenant un copolymère de monomères B1) et B2), et une phase dispersée comprenant des particules de copolymère de caoutchouc greffé C') composé de polymère de caoutchouc C) avec des greffons construits à partir de (parties ou portions de) monomères B1) et B2),
obtenu par polymérisation en masse ou en solution de monomères B1) et B2)
B1 : 50 à 70 % en masse, par rapport à B1), B2) et C), d'au moins un monomère vinylaromatique B1), préférentiellement le styrène et/ou l'alpha-méthylstyrène ;
B2 : 10 à 30 % en masse, par rapport à B1), B2) et C), d'au moins un comonomère B2) différent de B1), qui est l'acrylonitrile et/ou le méthacrylonitrile, éventuellement en association avec au moins un monomère supplémentaire choisi dans le groupe constitué par : les alkyle en C₁-C₄-(méth)acrylates, l'anhydride maléique, le N-phénylmaléimide, le N-cyclohexylmaléimide et le (méth)acrylamide ; dans un procédé en continu en présence de
C : 11 à 20 % en masse, par rapport à B1), B2) et C), d'un polymère de caoutchouc C) fabriqué à partir de :
C1 : 30 à 100 % en masse, préférentiellement 70 à 100 % en masse, par rapport à C1) et C2), d'un diène conjugué C1), préférentiellement le 1,3-butadiène et/ou l'isoprène ;
C2 : 0 à 70 % en masse, préférentiellement 0 à 30 % en masse, par rapport à C1) et C2), d'au moins un comonomère, préférentiellement le styrène ;
où la somme des constituants B1), B2) et C) est de 100 % en masse, et
b) 0 à 20 parts en masse, par rapport à 100 parts en masse de A), d'au moins un pigment D), et
c) 0 à 10 parts en masse, par rapport à 100 parts en masse de A), d'au moins un additif et/ou auxiliaire de transformation E), différent du constituant D) ;
dans lequel les comonomères B1) et B2), en particulier le styrène et l'acrylonitrile, sont utilisés dans un rapport massique B1):B2) allant de 76:24 à 74:26 ; et
dans lequel la composition de moulage est **caractérisée par**
• une granulométrie moyenne en masse (déterminée par photomicrographies électroniques colorées par OsO₄) du copolymère de caoutchouc greffé C') de plus de 0,5 µm ;
• un débit volumique de fusion MVR (220 °C/10 kg) conformément à ISO 1133-1:2011 de plus de 3 ml/10 min, préférentiellement de plus de 5 ml/10 min ;
• une teneur en composés organiques volatils résiduels ne dépassant pas 500 ppm ; et
• une teneur en agent de transfert de chaîne soufré mesurée en teneur en soufre de moins de 500 ppm ;
• lequel procédé est un procédé de polymérisation en masse ou en solution **caractérisé par** :
i) la dissolution d'un polymère de caoutchouc C) dans le ou les monomères B1), et éventuellement B2) et/ou un solvant, par agitation de la suspension, puis addition du comonomère B2) restant et éventuellement d'un solvant à la solution ou suspension de polymère de caoutchouc ;
ii) l'introduction en continu de la solution ou suspension obtenue dans l'étape i) dans un premier réacteur agité, préférentiellement un réacteur à cuve agitée en continu (CSTR), et la mise en œuvre d'une première polymérisation des monomères B1) et B2), par utilisation d'un ou de plusieurs amorceurs radicalaires, et
iii) éventuellement l'introduction en continu du contenu du premier réacteur dans un ou plusieurs, préférentiellement un, réacteurs agités supplémentaires, préférentiellement un réacteur à cuve agitée en continu (CSTR), pour une seconde polymérisation ; suivie par
iv) le dégazage du mélange fondu de polymère obtenu dans l'étape iii) par préchauffage dudit mélange fondu de polymère suivi d'une dévolatilisation dans un appareil de dévolatilisation.

2. Procédé de préparation d'une composition de moulage selon la revendication 1 dans lequel la composition de copolymère vinylaromatique modifié par caoutchouc A) est obtenue par polymérisation en masse ou en solution de
B1 : 59 à 70 % en masse, par rapport à B1), B2) et C), d'au moins un monomère vinylaromatique B1), préférentiellement le styrène et/ou l'alpha-méthylstyrène, en particulier le styrène ; et
B2 : 19 à 30 % en masse, par rapport à B1), B2) et C), d'au moins un comonomère B2) différent de B1), préférentiellement le (méth)acrylonitrile, en particulier l'acrylonitrile ;
dans un procédé en continu en présence de
C : 11 à 18 % en masse, par rapport à B1), B2) et C), d'un polymère de caoutchouc C).

3. Procédé de préparation d'une composition de moulage selon la revendication 1 ou 2 dans lequel la composition de moulage comprend 0,01 à 10 parts en masse d'au moins un additif et/ou auxiliaire de transformation en tant que constituant E).

4. Procédé de préparation d'une composition de moulage selon l'une quelconque des revendications 1 à 3 dans lequel au moins 1 % en masse des particules, plus préférentiellement au moins 10 % en masse des particules, le plus préférentiellement au moins 50 % en masse des particules, du copolymère de caoutchouc greffé C') ont une granulométrie moyenne en masse dans la plage de 0,51 à 5 µm.

5. Procédé de préparation d'une composition de moulage selon l'une quelconque des revendications 1 à 4 dans lequel le copolymère de caoutchouc greffé C') a une granulométrie moyenne en masse dans la plage de 0,51 à 2 µm.

6. Procédé de préparation d'une composition de moulage selon l'une quelconque des revendications 1 à 5 dans lequel les particules du copolymère de caoutchouc greffé C') ont une distribution granulométrique monodispersée.

7. Procédé de préparation d'une composition de moulage selon l'une quelconque des revendications 1 à 6, dans lequel :
dans l'étape ii) du procédé de polymérisation en masse ou en solution, la première polymérisation des monomères B1) et B2) en présence du polymère de caoutchouc C) est mise en œuvre à une température de 50 °C à 100 °C, préférentiellement de 60 à 90 °C ; et
dans l'étape iii) le contenu du premier réacteur est introduit en continu dans un ou plusieurs, préférentiellement un, réacteurs agités supplémentaires, préférentiellement un réacteur à cuve agitée en continu (CSTR), pour une seconde polymérisation à des températures de 100 °C à 150 °C ;
et où dans les étapes ii) et éventuellement iii) un agent de transfert de chaîne à des teneurs totales de 0,01 à 0,50 part en masse, par rapport à 100 parts en masse de la somme de B1), B2) et C) est ajouté.

8. Procédé de préparation d'une composition de moulage selon l'une quelconque des revendications 1 à 7, dans lequel :
dans l'étape i) le polymère de caoutchouc C) est dissous uniquement dans le monomère B1), plus éventuellement un solvant.

9. Procédé de préparation d'une composition de moulage selon l'une quelconque des revendications 1 à 8 dans lequel :
dans les étapes ii) et iii) des réacteurs à cuve agitée en continu ayant une vitesse d'agitation dans la plage de 5 à 200 rpm sont utilisés.

10. Procédé de préparation d'une composition de moulage selon l'une quelconque des revendications 1 à 9 dans lequel deux réacteurs à cuve agitée en continu (CSTR) en série sont utilisés, où un CSTR est utilisé dans l'étape ii) et un CSTR supplémentaire dans l'étape iii) .

11. Procédé de préparation d'une composition de moulage selon l'une quelconque des revendications 1 à 10 dans lequel trois CSTR en série sont utilisés, où un CSTR est utilisé dans l'étape ii) et deux CSTR supplémentaires dans l'étape iii).

12. Procédé de préparation d'une composition de moulage selon l'une quelconque des revendications 1 à 11 lequel procédé est un procédé de polymérisation en solution dans lequel dans l'étape i) un solvant, préférentiellement la méthyléthylcétone et/ou l'éthylbenzène, est utilisé.

13. Procédé de préparation d'une composition de moulage selon l'une quelconque des revendications 1 à 12 dans lequel
dans l'étape iv) en tant qu'appareil de dévolatilisation un évaporateur partiel ou un dévolatiliseur à brins tombants, en particulier un dévolatiliseur à brins tombants à deux étages, est utilisé.

14. Procédé de préparation d'une composition de moulage selon la revendication 1 où dans l'étape ii), la première polymérisation est mise en œuvre jusqu'à une conversion d'au moins 20 % en masse, préférentiellement d'au moins 25 % en masse ; et dans l'étape iii), la seconde polymérisation est mise en œuvre jusqu'à une conversion d'au moins 50 % en masse, préférentiellement d'au moins 60 % en masse.

15. Composition de moulage obtenue par le procédé selon l'une quelconque des revendications 1 à 14.

16. Utilisation de la composition de moulage selon la revendication 15 pour applications ménagères et automobiles, en particulier applications automobiles intérieures.
